## Europäisches Patentamt

## European Patent Office

## Office européen des brevets

(11) Publication number: **0 107 641**
**B1**

(12) **EUROPEAN PATENT SPECIFICATION**

(45) Date of publication of patent specification: **07.01.88**

(51) Int. Cl.⁴: **G 01 F 1/32**

(21) Application number: **83870111.8**

(22) Date of filing: **20.10.83**

(54) **Improved vortex flow meter.**

(30) Priority: **25.10.82 US 436426**

(43) Date of publication of application:
**02.05.84 Bulletin 84/18**

(45) Publication of the grant of the patent:
**07.01.88 Bulletin 88/01**

(84) Designated Contracting States:
**DE FR GB IT NL**

(56) References cited:
**DE-B-2 458 901**
**GB-A-1 526 358**
**GB-A-1 533 717**
**GB-A-2 068 551**

(73) Proprietor: **Fisher Controls International, Inc.**
**13 floor 8000 Maryland Avenue**
**Clayton Missouri 63105 (US)**

(72) Inventor: **Burlage, Brian Joseph**
**R.R. 3**
**Marshalltown Iowa 50158 (US)**
Inventor: **Lenz, Gary Alan**
**1305 Fairway Drive**
**Marshalltown Iowa 50158 (US)**
Inventor: **Wiklund, David Eugene**
**3103 Fieldcrest Court**
**Marshalltown Iowa 50158 (US)**

(74) Representative: **McLean, Peter et al**
**Monsanto Europe S.A. Patent Department**
**Avenue de Tervuren 270-272 Letter Box No 1**
**B-1150 Brussels (BE)**

Courier Press, Leamington Spa, England.

**Description**

This invention relates to. a volumetric flow meter, and more particularly, to an improved vortex flow meter.

Volumeric flow meters such as vortex flow meters have employed strain gauges, capacitors, piezoelectric disks and the like as flow sensors. Meters of this type have often been sensitive to strain induced by external vibration. The strain has reached the meters through the piping in which the meters have been located, from vibration sources such as wind, control valve turbulence, and reciprocating machinery including compressors and pumps. Transmission of the vibration to the flow sensors has caused strain in the sensors, resulting in erroneous sensor outputs.

U.K. Patent Specification 1 526 358 discloses a vortex flow meter which is purportedly substantially immune to acceleration forces resulting from shock waves or mechanical vibrations transmitted to the meter through the piping. In that meter, a deflectable section containing the sensor, a strain gauge, is cantilevered behind a fixed, vortex-generating section by a pair of spaced beams. The upper beam takes the form of a flat strip of flexible metal which is bendable in the lateral, or X-plane, direction, but is stiff and therefore unbendable in the up-and-down, or Y-plane, direction. The lower beam has a cruciform cross-section to resist bending in both the X-plane and the Y-plane, and the deflection section is mass-balanced around the lower beam. Both beams are torsionally weak such that the deflectable section swings back and forth about the torsional lower beam as a result of the vortices shed by the fixed section, and the strain gauges sensor senses the bending strain to provide an output signal having a frequency corresponding to the rate of swing. It is said that shock waves or mechanical vibrations applied in the Y-plane will not affect the deflection section because both beams are inherently stiff and unbendable in that plane, and that similar forces applied in the X-plane do not affect the meter because the lower beam is also unbendable in that plane and because the upper beam is unaffected because the deflection section is mass-balanced around the lower beam.

U.K. Patent Application 2 068 551 A also purports to disclose a vortex shedding flow measuring device which is not affected by pipe vibration. In that device, the vortex generating body has an axial recess with an electrode structure inserted in the recess and spaced from the walls of the recess. The electrode structure comprises a pair of electrodes disposed symmetrically on opposite sides of the recess in a plane normal to the direction of the fluid flow so that a pair of capacitors are formed by each electrode and the adjacent section of the recess walls. As the vortex generating body is displaced laterally by the forces of the vortices, the capacitances vary in a differential manner, and this differential capacitance is processed through a bridge circuit to determine the rate of fluid flow. It is said that the changes of capacitances due to the noise vibrations are negated because these changes take place at the same phase.

Neither of these devices, however, purport to reduce flow meter sensitivity to vibration in the manner in which it is accomplished by the vortex flow meter of the present invention.

Summary of the Invention

It is an object of the invention to significantly reduce the vibration sensitivity of flow meters.

Another object is to accomplish the sensitivity reduction by actually reducing the strain transmitted to the sensors, rather than electronically conditioning the sensor signal, to permit the employment of simpler, less expensive electronic circuitry. Other objects are to accomplish the desired sensitivity reduction with a structure which is compatible with existing flow meters, economical to manufacture, reliable, and resistant to fatigue.

To accomplish these objects, the vortex flow meter of the present invention comprises a housing defining a fluid flow passage, a sensor body having a mounting portion mounted to the housing and a flow sensor supporting portion in the fluid flow passage, and flow sensor means supported by the flow sensor supporting portion for sensing fluid flow in the fluid flow passage and for providing a signal representative of the fluid flow, characterized by the sensor body further having a strain relief portion intermediate the mounting portion and the flow sensor supporting portion, the strain relief portion having a stiffness substantially less than the stiffness of the flow sensor supporting portion to relieve induced strain of the flow sensor supporting portion from external vibration, whereby the vortex flow meter is substantially insensitive to external vibration.

These and other details, aspects, objects and advantages of the invention are fully set forth in the detailed description which follows.

Brief Description of the Drawing

The preferred embodiment of the invention is described below in relation to the accompanying drawing. Briefly, the drawing includes five figures, or FIGS., as follows:

FIG. 1 is a partially cut-away view of a flow transmitter including a signal conditioner and flow meter, which incorporates the sensor body of the preferred embodiment of the invention;

FIG. 2 is a side elevational view of the sensor body of the preferred embodiment;

FIG. 3 is a front elevational view of the sensor body;

FIG. 4 is a front cross-sectional view of the sensor body; and

FIG. 5 is a cross-sectional view taken along line 5-5 of FIG. 2.

### Detailed Description of the Preferred Embodiment

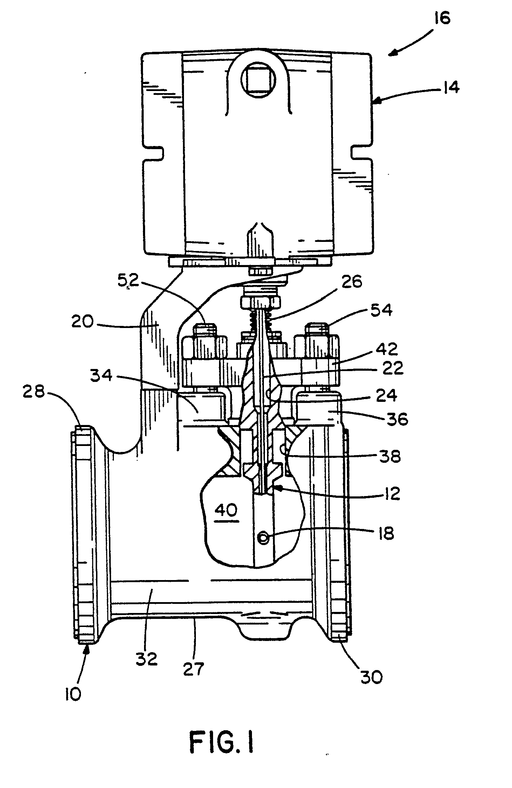

Referring to FIG. 1, the preferred embodiment of the invention is both an improved flow meter 10 and an improved sensor body 12 which may also function as a vortex shedding bluff body. The sensor body 12 is a part of the flow meter 10, which is joined by a signal conditioner 14 to form a flow transmitter 16.

As most preferred, the meter 10 employs piezoelectric disks such as disk 18 as its sensors. Further, as most preferred, the conditioner 14 is cantilevered atop the meter 10 by a bracket 20, and electrical circuitry such as sensor leads 22 join the disks 18 and the conditioner 14. The leads 22 pass through an internal circuitry passage 24 in the body 12 and inside a flexible bellows 26, to reach the conditioner 14. Detailed information about the disks 18 is provided in U.S. Patent No. 4,559,832, issued December 24, 1985 in the names of Brian J. Burlage, et al., for a Piezoelectric Pressure Frequency Sensor.

Concentrating on the meter 10 and body 12, the meter 10 includes a housing 27 of two flanges 28, 30 and a central section 32. Two mounting plates, or bosses, 34, 36 are provided atop the section 32, for mounting of the sensor body 12. A sensor body opening 38 opens into the central fluid passage 40 within the section 32.

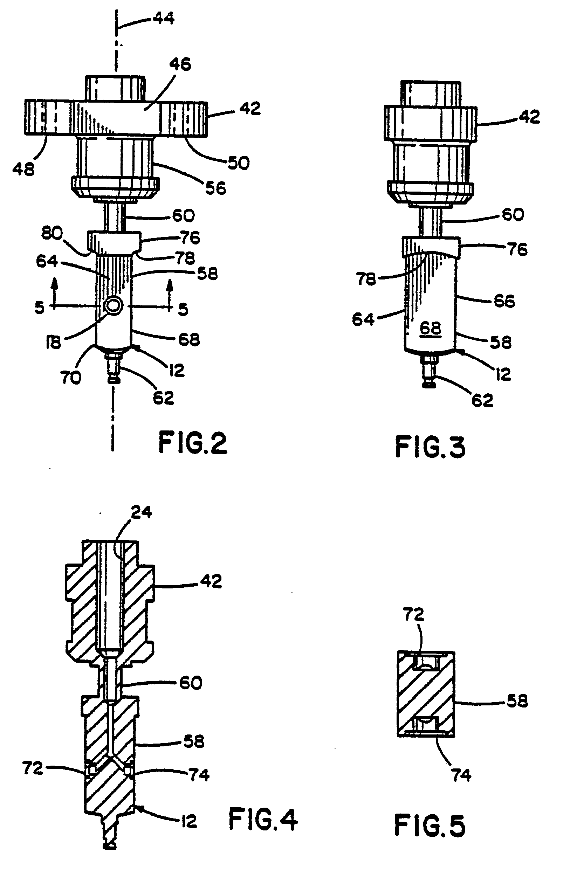

The sensor body 12 includes a mounting portion 42. The body 12 extends along a central axis 44, as shown in FIG. 2, and the mounting portion 42 includes a flange 46 extending generally perpedicular to the axis 44. The flange 46 provides two fastening areas, 48, 50, where fasteners such as the bolts 52, 54 of FIG. 1 are employed to mount and fasten the flange 46, and thereby the body 12, to the mounting plates 34, 36, and thereby the meter housing 27.

A cylindrical section 56 of the mounting portion 42 extends between the plates 34, 36 from the flange 46 to the upper surface of the housing central section 32. When the body 12 is mounted, the section 56 caps the opening 38.

Below the section 56, the sensor body 12 includes a sensor supporting portion 58, an intermediate, strain relief portion 60 and a bottom, retained end 62. The portion 60 is intermediate the portions 42, 58 in that it is between the portions 42, 58.

The sensor supporting portion 58 is rectangular, as best shown in FIG. 5. The portion 58 includes opposed sidewalls 64, 66 and endwalls 68, 70. The sidewalls 64, 66 define sensor receiving recesses 72, 74. The circuitry passage 24 terminates at the recesses 72, 74.

Adjacent the strain relief portion 60, the sensor supporting portion 58 includes an enlarged, generally cylindrical area 76. The opposed bottom surfaces 78, 80 of the area 76 above the endwalls 68, 70 are concave, to blend with the contour of the inner wall of the housing central section 32. As shown in FIG. 1, when the sensor body 12 is properly located in the housing 27, the sensor supporting portion 58 is in the central fluid passage 40, while the enlarged area 76 loosely fits the opening 38, to protect the strain relief portion 60 from fluid turbulence, and to create continuity in the contour of the housing inner wall. Continuity eliminates disruption of the Von Karman vortex street in the fluid passage 40. When the sensor body 12 is properly located in the housing 27, the strain relief portion 60 is thus within the opening 38.

The strain relief portion 60 is outwardly cylindrical, and as shown in FIGS. 1 and 4, annular. The portion 60 is adapted to relieve strain in the sensor supporting portion 58 from external vibration. Surprisingly, bending moments induced on piping have been the cause of strain on the flow meters. The moments result in sensor body deflections in the order of hundredths of a micron. These deflections, while nearly infintesimal, cause the sensor strain. The strain relief portion 60 "absorbs" these deflections, leaving the portion 58 only insignificantly deflected.

To so absorb the deflections, the strain relief portion 60 has a stiffness substantially less than that of the sensor supporting portion 58. Thus, the portion 60 acts as a spring. Ideally, the stiffness would be zero and the portion 60 would absorb all of the deflections. In reality, the tolerable deflection of the portion 58 is established for the particular sensors in use, and the portion 60 configured to transmit no more than this deflection. Axial stresses, hydrostatic stresses, operating temperature, material choice and fatigue are also accommodated. Generally, a smaller circuitry opening 24, an axially longer portion 60 and a thinner portion 60 are preferred. With a steel body 12, the following characteristics of the portion 60 have been found acceptable: for a pipe size ("size") of 25 mm, a nominal outer diameter (OD) of 5.26 mm; a nominal inner diameter (ID) of 3.18 mm, and a nominal length (L) of 15.24 mm; for a size of 40 mm, an OD of 7.82 mm, an ID of 4.78 mm, and an L of 17.78 mm; for a size of 50 mm, an OD of 9.14 mm, an ID of 6.60 mm, and an L of 17.78 mm; for a size of 80 mm, an OD of 11.18 mm, an ID of 6.60 mm, and an L of 15.24 mm; for a size of 100 mm, an OD of 15.75 mm; an ID of 12.70 mm, and an L of 12.70 mm; and for a size of 150 mm, an OD of 21.44 mm, an ID of 15.85 mm, and an L of 17.78 mm. Tolerances are OD + 0.13 mm, ID − 0.13 mm, and L + 0.15 mm.

As drawn, the outer dimension of the portion 60 is substantially less than the outer dimensions of the portion 58. Also, as shown, the strain relief portion 60 is cylindrical, but it will be understood that other shapes may be utilized. Strain relief with such other shapes may be accomplished by having the dimensions of the strain relief portion 60 in the planes of vibration being substantially less than the corresponding dimensions of the sensor supporting portion 58 in the planes of vibration. For example, as shown in Fig. 3, the width of the end walls 68, 70 is substantially greater than the corresponding dimension of the strain relief portion 60.

## Claims

1. A vortex flow meter (10) comprising a housing (27) defining a fluid flow passage (40), a sensor body (12) having a mounting portion (42) mounted to the housing (27) and a flow sensor supporting portion (58) in the fluid flow passage (40), and flow sensor means (18) supported by the flow sensor supporting portion (58) for sensing fluid flow in the fluid flow passage (40) and providing a signal representative of the fluid flow, characterized by the sensor body (12) further having a strain relief portion (60) intermediate the mounting portion (42) and the flow sensor supporting portion (58), the strain relief portion (60) having a stiffness substantially less than the stiffness of the flow sensor supporting portion (58) to relieve induced strain of the flow sensor supporting portion (58) from external vibration, whereby the vortex flow meter (10) is substantially insensitive to external vibration.

2. A vortex flow meter (10) according to Claim 1 having a sensor body opening (38) which opens through the housing (27) to the fluid flow passage (40), characterized by the strain relief portion (60) being located within the sensor body opening (38) of the housing (27).

3. A vortex flow meter (10) according to Claim 2 characterized by the flow sensor supporting portion (58) having an enlarged area (76) loosely fit in the sensor body opening (38) to minimise coupling of vibration from the housing (27) to the flow sensor supporting portion (58).

4. A vortex flow meter (10) according to Claim 3 characterized by the enlarged area (76) having surfaces (78, 80) which blend with the contour of the housing (27) to provide continuity in the contour of the fluid flow passage (40) at the sensor body opening (38).

5. A vortex flow meter (10) according to Claim 2 characterized by the mounting portion (42) having a flange (46) capping the sensor body opening (38).

6. A vortex flow meter (10) according to Claim 5 characterized by the sensor body (12) defining an internal passage (24) opening through the flange (46) for electrical leads (22) from the flow sensor means (18) to externally located electrical circuitry.

7. A vortex flow meter (10) according to any of Claims 1 to 6 characterized by the flow sensor supporting portion (58) having a first major outer dimension in a plane of vibration and the strain relief portion (60) having a second outer dimension in the plane of vibration, the second outer dimension being substantially less than the first outer dimension such that the strain relief portion (60) is thin relative to the flow sensor supporting portion (58).

8. The use of a vortex flow meter (10) according to any of Claims 1 to 7.

## Patentansprüche

1. Wirbelströmungsmeßgerät (10) mit einem Gehäuse (27), das einen Strömungskanal (40) für ein Fluid bildet, einem Sensorkörper (12) mit einem an dem Gehäuse (27) angebrachten Montageteil (42) und einem Strömungssensor-Halteteil (58) in dem Strömungskanal (40) und mit durch den Halteteil (58) gehaltenen Strömungssensormitteln (18) zur Abtastung der Fluidströmung in dem Strömungskanal (40) und zur Erzeugung eines für die Fluidströmung repräsentativen Signals, dadurch gekennzeichnet, daß der Sensorkörper (12) ferner einen zwischen dem Montageteil (42) und dem Strömungssensor-Halteteil (48) angeordneten Entlastungsteil (60) aufweist, dessen Steifheit wesentlich kleiner ist als die Steifheit des Strömungssensor-Halteteils (58) und der dazu dient, den Strömungssensor-Halteteil (58) von durch externe Erschüttergungen induzierten Verformungen zu entlasten, so daß das Wirbelströmungsmeßgerät (10) im wesentlichen unempfindlich gegenüber externen Erschüttergungen ist.

2. Wirbelströmungsmeßgerät (10) nach Anspruch 1, mit einer Sensorkörper-Öffnung (38), die durch das Gehäuse (27) zu dem Strömungskanal (40) geöffnet ist, dadurch gekennzeichnet, daß der Verformungs-Entlastungsteil (60) in der Sensorkörper-Öffnung (38) des Gehäuses (27) angeordnet ist.

3. Wirbelströmungsmeßgerät (10) nach Anspruch 2, dadurch gekennzeichnet, daß der Strömungssensor-Halteteil (58) einen vergrößerten Bereich (76) aufweist, der lose in die Sensorkörper-Öffnung (38) eingesetzt ist, um die Schwingungskopplung von dem Gehäuse (27) zu dem Strömungssensor-Halteteil (58) zu minimieren.

4. Wirbelströmungsmeßgerät (10) nach Anspruch 3, dadurch gekennzeichnet, daß der vergrößerte Bereich (76) Oberflächen (78, 80) aufweist, die in die Kontur des Gehäuses (27) übergehen, um eine stetige Kontur des Strömungskanals (40) an der Sensorkörper-Öffnung (38) zu gewährleisten.

5. Wirbelströmungsmeßgerät (10) nach Anspruch 2, dadurch gekennzeichnet, daß der Montageteil (42) einen die Sensorkörper-Öffnung (38) abdeckenden Flansch (46) aufweist.

6. Wirbelströmungsmeßgerät (10) nach Anspruch 5, dadurch gekennzeichnet, daß der Sensorkörper (12) in seinem Innerem einen durch den Flansch (46) verlaufenden Kanal (24) für elektrische Leitungen (22) von den Strömungssensormitteln (18) zu extern angeordneten elektrischen Schaltungun aufweist.

7. Wirbelströmungsmeßgerät (10) nach einem der Ansprüche 1 bis 6, dadurch gekennzeichnet, daß der Strömungssensor-Halteteil (58) eine erste größere Außenabmessung in einer Schwingungsebene und der Verformungs-Entlastungsteil (60) eine zweite Außenabmessung in der Schwingungsebene aufweist un daß die zweite Außenabmessung wesentlich kleiner als die erste Außenabmessung ist, so daß der Entlastungsteil (60) dünn im Verhältnis zu dem Strömungssensor-Halteteil (58) ist.

8. Anwendung eines Wirbelströmungsmeßgerätes (10) nach einem der Ansprüche 1 bis 7.

## Revendications

1. Débitmètre à tourbillons (10) comprenant un logement (27) définissant un canal d'écoulement de fluide (40), un corps de capteur (12) ayant une partie de montage (42) installée sur le logement (27) et une portion (58) de support de capteur de débit dans le canal d'écoulement de fluide (40) et un moyen de capteur de débit (18) maintenu par la portion (58) de support de capteur de débit afin de détecter le débit dans le canal d'écoulement de fluide (40) et fournissant un signal représentatif du débit de fluide, caractérisé en ce que: — le corps de capteur (12) comporte en outre une portion (60) de libération des contraintes entre la partie de montage (42) et la portion (58) de support de capteur de débit, la portion (60) de libération des contraintes ayant une rigidité sensiblement inférieure à la rigidité de la portion (58) de support de capteur de débit afin de libérer les contraintes induites dans la portion (58) de support de capteur de débit dues aux vibrations extérieures, d'où il résulte que le débitmètre à tourbillons (10) est pratiquement insensible aux vibrations extérieures.

2. Débitmètre à tourbillons (10) selon la revendication 1, ayant une ouverture (38) dans le corps de capteur qui débouche par l'intermédiaire du logement (27) dans le canal d'écoulement de fluide (40), caractérisé en ce que la portion (60) de libération des contraintes est située dans l'ouverture (38) du corps de capteur ménagée dans le logement (27).

3. Débitmètre à tourbillons (10) selon la revendication 2, caractérisé en ce que la portion (58) de support de capteur de débit présente une zone agrandie (76) montée avec jeu dans l'ouverture (38) du corps de capteur afin de minimiser le couplage des vibrations entre le logement (27) et la portion (58) de support de capteur de débit.

4. Débitmètre à tourbillons (10) selon la revendication 3, caractérisé en ce que la zone agrandie (76) a des surfaces (78, 80) qui se fondent dans le contour du logement (27) pour assurer la continuité du contour du canal d'écoulement de fluide (40) au droit de l'ouverture (38) du corps de capteur.

5. Débitmètre à tourbillons (10) selon la revendication 2, caractérisé en ce que la partie de montage (42) comporte un flasque (46) coiffant l'ouverture (38) du corps de capteur.

6. Débitmètre à tourbillons (10) selon la revendication 5, caractérisé en ce que le corps de capteur (12) définit un conduit interne (24) débouchant dans le flasque (46) pour des fils électriques (22) entre le moyen de capteur de débit (18) et un circuit électrique situé à l'extérieur.

7. Débitmètre à tourbillons (10) selon l'une quelconque des revendications 1 à 6, caractérisé en ce que la portion (58) de support de capteur de débit présente une première cote extérieure principale dans le plan de vibration et la portion (60) de libération des contraintes une seconde cote extérieure dans le plan de vibration, la seconde cote extérieure étant sensiblement inférieure à la première cote extérieure de sorte que la portion (60) de libération des contraintes est peu épaisse par rapport à la portion (58) de support de capteur de débit.

8. Utilisation d'un débitmètre à tourbillons (10) selon l'une quelconque des revendications 1 à 7.

FIG. I

FIG.2

FIG.3

FIG.4

FIG.5